(19) Europäisches Patentamt
European Patent Office
Office européen des brevets

(11) Publication number: **0 338 694**
**A2**

(12) **EUROPEAN PATENT APPLICATION**

(21) Application number: 89303269.8

(22) Date of filing: 03.04.89

(51) Int. Cl.[4]: C08F 283/10 , C08F 299/04

(30) Priority: 21.04.88 JP 96818/88

(43) Date of publication of application: 25.10.89 Bulletin 89/43

(84) Designated Contracting States: DE FR GB

(71) Applicant: TEIJIN LIMITED
6-7, Minamihonmachi 1-chome Chuo-ku
Osaka-shi Osaka 541(JP)

(72) Inventor: Hiroshi, Mera
5-46-19 Minamiiwakuni-cho
Iwakuni-shi Yamaguchi(JP)
Inventor: Hiroyuki, Umetani
1-28-2, Ozumachi
Iwakuni-shi Yamaguchi(JP)

(74) Representative: Arthur, Bryan Edward et al
Withers & Rogers 4 Dyer's Buildings Holborn
London EC1N 2JT(GB)

(54) **Process for preparation of cured resin molded article and reactive curable molding composition used therefor.**

(57) A cured resin molded article is prepared by forming independently [I] a liquid composition consisting essentially of an unsaturated polyester and a polyfunctional epoxide and [II] a liquid composition consisting essentially of an amine type epoxy-curing agent and a vinyl-polymerizable reactive diluent, incorporating a radical initiator into at least one of the two liquid compositions before or at the molding step, mixing both liquid compositions at the molding step, and reacting and curing the mixture.

EP 0 338 694 A2

# PROCESS FOR PREPARATION OF CURED RESIN MOLDED ARTICLE AND REACTIVE CURABLE MOLDING COMPOSITION USED THEREFOR

## BACKGROUND OF THE INVENTION

### (1) Field of the Invention

The present invention relates to a novel process for the preparation of a cured resin molded article composed of a composite polymer comprising a cured resin of an unsaturated polyester (hereinafter referred to as "UPE") and a cured epoxy resin, and further, to a combination of reactive compositions to be used for this process.

### (2) Description of the Related Art

UPE is widely used as BMC (bulk molding resin) or SMC (sheet molding resin), and especially as a glass fiber-reinforced resin. Furthermore, UPE has recently been used as the resin for RIM (reaction injection molding) or RTM (resin transfer molding). It is considered that the fields of application of most popular UPE comprising isophthalic or terephthalic acid and maleic acid (fumaric acid) as the acid component and propylene glycol or ethylene glycol as the alcohol component will be broadened by improving the heat resistance, thermal shrinkability, surface characteristics, toughness and the like thereof.

Attempts have been made to realize this object by combining UPE with, for example, an amine-curable epoxy resin, as proposed in U.S. Patent No. 3,383,434, but in this multi-component system, the solution viscosity is gradually increased, and particularly in case of RIM or RI (resin injection) where a large impregnation of reinforcing fibers is required, gelation occurs before the reinforcing fibers are sufficiently impregnated with the resin liquid, with the result that various problems grise such as a formation of a molded article having a large number of voids therein.

## SUMMARY OF THE INVENTION

An object of the present invention is to provide a novel process for the preparation of a cured resin molded article which has appropriately improved characteristics such as heat resistance, molding shrinkability, surface characteristics and toughness, wherein two liquid compositions in which a change of the viscosity thereof is reduced over a long period are independently prepared, these two liquid compositions are mixed at the molding step, and the curing reaction is promptly carried out even though the viscosity is low just after the mixing.

The present inventors carried out research into this object and found that, by dividing a curable UPE resin system and a curable epoxy resin system into substantially two liquid compositions and mixing, molding and curing both liquids, a good reaction-cured resin molded article can be prepared without an occurrence of the problems mentioned above.

Therefore, accordance with one aspect of the present invention, there is provided a process for the preparation of a cured resin molded article, which comprises independently forming [I] a liquid composition consisting essentially of an unsaturated polyester and a polyfunctional epoxide and [II] a liquid composition consisting essentially of an amine type epoxy-curing agent and a vinyl-polymerizable reactive diluent, incorporating a radical initiator into at least one of these two liquid compositions before or at the molding step, mixing both liquid compositions at the molding step, and reacting and curing the mixture.

Further, accordance with another aspect of the present invention, there is provided a reactive curable molding composition for use when carrying out the above-mentioned preparation process which comprises, in combination, [I] a liquid composition consisting essentially of an unsaturated polyester and a polyfunctional epoxide, and [II] a liquid composition consisting essentially of an amine type epoxy-curing agent and a vinyl-polymerizable reactive diluent, a radical initiator being incorporated in at least one of these two liquid compositions.

## DESCRIPTION OF THE PREFERRED EMBODIMENTS

The constituent components of the compositions [I] and [II] and the preparation of a reacted cured resin molded article by mixing and curing both of the liquid compositions in the present invention will now be described in detail.

## Composition [I]

The composition [I], which is one of the two above-mentioned liquids, consists essentially of the following UPE and polyfunctional epoxide components.

### (a) UPE component

The unsaturated polyester used in the present invention is an unsaturated polyester prepared from an $\alpha,\beta$-unsaturated dibasic acid and/or an ester-forming derivative thereof or a mixture thereof with a saturated dibasic acid and/or an ester-forming derivative thereof, and a polyhydric alcohol and/or an organic epoxide such as propylene oxide, by a known process. For example, there can be mentioned an unsaturated polyester having an average molecular weight, expressed as usual by a viscosity of a styrene solution, corresponding to a viscosity of 1 to 50 poises as measured in a 50 % styrene solution at 25 °C and an acid value of 50 to 4,000 moles/ton of the polymer, which is derived from an unsaturated aliphatic dicarboxylic acid, an aromatic dicarboxylic acid, and an aliphatic diol.

As the $\alpha,\beta$-unsaturated dibasic acid used in the present invention, there can be mentioned maleic acid, halogenomaleic acid, fumaric acid, citraconic acid, itaconic acid, halogenoitaconic acid, 5-norbornene-2,3-dicarboxylic acid, methyl-5-norbornene-2,3-dicarboxylic acid, tetrahydrophthalic acid, methyltetrahydrophthalic acid and tetrachlorophthalic acid, and intramolecular acid anhydrides and alkyl esters thereof. As the saturated dibasic acid, there can be mentioned phthalic acid, halogenophthalic acid, phthalic anhydride, halogenophthalic anhydride, isophthalic acid, terephthalic acid, herxahydrophthalic acid, hexahydrophthalic anhydride, methylhexahydrophthalic acid, methylhexahydrophthalic anhydride, dibromotetrahydrophthalic acid, dibromotetrahydrophthalic anhydride, succinic acid, succinic anhydride, adipic acid, glutaric acid, pimelic acid, succinic acid, azelaic and sebacic acid, and alkyl esters thereof. If necessary, a monobasic acid such as acrylic acid, methacrylic acid, propionic acid, butyric acid, valeric acid, higher fatty acid, benzoic acid,. p-hydroxybenzoic acid or octylic acid, or a polybasic acid such as trimellitic acid, hemimellitic acid, trimesic acid or benzole-tetracarboxylic acid can be added as a modifier to the above-mentioned $\alpha,\beta$-unsaturated dibasic acid, or a mixture thereof with the saturated dibasic acid.

As the polyhydric alcohol, there can be mentioned ethylene glycol, diethylene glycol, triethylene glycol, polyethylene glycol, propylene glycol, dipropylene glycol, tripropylene glycol, polypropylene glycol, 1,3-butylene glycol, 1,4-butylene glycol, tetramethylene glycol, 1,6-hexane-diol, neopentyl glycol, hydrogenated bisphenol A, and an ethylene or propylene oxide adduct of bisphenol A. The polyhydric alcohol is used in an amount equivalent to the acid component or an amount larger by up to 20 mole% than the equivalent amount. If necessary, a higher aliphatic alcohol such as amyl alcohol, hexyl alcohol, pentyl alcohol, octyl alcohol, nonyl alcohol or decyl alcohol, monohydric alcohol such as tetrahydrofurfuryl alcohol, or a polyhydric alcohol such as glycerol, pentaerrythritol, trimethylolethane, trimethylolpropane, trimethylolbutane, sorbitol, erythrol or mesoerythrol, can be used in combination with the above-mentioned polyhydric alcohol.

A mixture of two or more of the foregoing unsaturated polyesters can be used.

### (b) Polyfunctional Epoxide

As the polyfunctional epoxide used in the present invention, there can be mentioned saturated and unsaturated aliphatic, alicyclic, aromatic, and heterocyclic polyfunctional epoxides. Typical polyfunctional epoxides disclosed in the specifications U.S. Patent No. 2,633,458, U.S. Patent No. 3,373,221 and U.S. Patent No. 3,377,406 can be used, so long as they can be liquefied in the formulation of the present invention, by any known means. For example, a polyfunctional epoxide which is solid or semi-solid can be used in the present invention, if the polyfunctional epoxide is liquid at the molding temperature when mixed with an other polyfunctional epoxide or other reactive diluent.

The following compounds can be mentioned as specific examples of the polyfunctional epoxide.

1) Glycidyl ethers of alcohols and phenols, for example, glycidyl ethers of polyhydric phenols such as 2,2-bis(4-hydroxyphenyl)propane (bisphenol A), 4,4 -dihydroxydiphenylmethane, 4,4 -dihydroxydiphenylsulfone, resorcinol, dihydroxynaphthalene, phenol novolak, cresol novolak, resorcinol novolak and dihydroxynaphthalene novolak, glycidyl ethers of polyhydric alcohols obtained from phenols such as phenol and dihydroxynaphthalene by dehydration condensation (for example, in the presence of an acidic catalyst) with aldehydes such as glyoxal, glutaraldehyde, p-hydroxybenzaldehyde, benzaldehyde, isophthal aldehyde and tereohthal aldehyde, glycidyl ethers of polyhydric alcohols such as butane-diol, propylene glycol, polyethylene glycol and glycerol, and prepolymers thereof.

2) Glycidyl esters of carboxylic acids, such as glycidyl esters of dicarboxylic acids such as phthalic acid, isophthalic acid, terephthalic acid, tetrahydrophthalic acid, naphthalenedicarboxylic acid, prepolymers thereof, and glycidyl methacrylate.

3) Glycidyl ether-esters of hydroxycarboxylic acids, such as glycidyl ether-esters of m-hydroxybenzoic acid, p-hydroxybenzoic acid, and hydroxynaphthoic acid.

4) N-glycidyl compounds such as N-glycidyl compounds derived from nitrogen-containing compounds such as aniline, isocyanuril acid, diaminodiphenyl-sulfone, diaminodiphenyl ether, and diaminodiphenyl-methane.

5) Other compounds such as epoxy resins derived from alicyclic compounds such as cyclopentadiene and dicyclopentadiene, triglycidyl compound of p-aminophenol, and vinylcyclohexene dioxide.

Among the foregoing polyfunctional epoxides, in view of the easy availability and physical properties such as heat resistance of the cured molded resin, there are preferably used a diglycidyl ether of 2,2-bis(4-hydroxyphenyl)propane (bisphenol A), a diglycidyl ether of 4,4′-dihydroxydiphenylmethane, a polyglycidyl ether of phenol novolak, a polyglycidyl ether of naphtol novolak, a polyglycidyl ether of a polyol obtained by dehydration reaction of a phenol with an aldehyde (such as glyoxal, glutaraldehyde, benzaldehyde, or p-hydoxybenzaldehyde) in the presence of an acidic catalyst, a diglycidyl ether of polypropylene glycol, a diglycidyl ether of polyethylene glycol, a diglycidyl ether of butane-diol, a diglycidyl ether of glycerol, a triglycidyl ether of glycerol, a glycidyl ether-ester of a hydroxycarboxylic acid such as m- or p-hydroxybenzoic acid or hydroxynaphthoic acid, a triglycidyl compound of p-aminophenol and vinylcyclohexene dioxide. There are especially preferably used a diglycidyl ether of bisphenol A, a diglycidyl ether of bisphenol F, a polyglycidyl ether of cresol novolak, a polyglycidyl ether of -naphthol novolak, a polyglycidyl ether of a polyol obtained by dehydration reaction of a phenol with an aldehyde (such as glyoxal, glutaraldehyde, benzaldehyde or p-hydroxybenzaldehyde) in the presence of an acidic catalyst, a diglycidyl ether of polypropylene glycol, a diglycidyl ether of polyethylene glycol, a diglycidyl ether of butane-diol, a diglycidyl ether of glycerol, a triglycidyl ether of glycerol, N,N,N′N′-tetraglycidylmethylene-dianiline, a glycidyl ether-ester of a hydroxycarboxylic acid such as m- or p-hydroxybenzoic acid or hydroxynaphthoic acid, a triglycidyl compound of p-aminophenol and vinylcyclohexane dioxide. These polyfunctional epoxides can be used alone or as a mixture of two or more thereof.

(c) Mixing of UPE and Polyfunctional Epoxide.

The above-mentioned composition [I] is prepared by mixing the UPE component with the polyfunctional epoxide component and, if necessary, heating and stirring the mixture. Where it is difficult to form a solution by mixing both components, a method can be adopted in which the skeleton of the UPE component is modified, for example, by introducing a Diels-Alder addition adduct structure into the main chain of TPE (see Japanese Patent Application No. 62-156472), and a method in which a compatibilizer is used.

The composition prepared by mixing the UPE component with the polyfunctional epoxide sometimes has a high viscosity, and if a composition having a lower viscosity is desired, a reactive diluent can be used. A viscosity cutter capable of reducing the viscosity of the polyfunctional epoxide, such as butylglycidyl ether, can be used for reducing the viscosity according to need. Of course, the above-mentioned reactive diluent and viscosity cutter should not be such that, when incorporated into the UPE component or the polyfunctional epoxide, the change of viscosity of the composition [I] with the lapse of time degrades the utility of the resin composition.

Composition [II]

The other liquid composition [II] used in the present invention consists essentially of an amine-type epoxy-curing agent and a vinyl-polymerizable reactive diluent.

(a) Amine-Type Epoxy-Curing Agent

A primary aliphatic amine and/or a secondary aliphatic amine (including an alicyclic amine) can be used as the amine-type epoxy-curing agent in the present invention. Preferably, these amines have a melting point of lower than 200 °C. Note, the "aliphatic amine" referred to in the present invention includes an alicyclic amine. Where the curing reaction is carried out at a relatively low temperature, only an aliphatic diamine is used, but where the curing reaction is carried out at a high temperature, an aromatic diamine can be used in combination with the aliphatic amine. The heat resistance of the cured molded article can be improved by using an aromatic diamine.

As the aliphatic amine-type curing agent, there can be mentioned ethylene diamine, diethylene triamine, triethylene tetraamine, tetraethylene pentaamine, diaminodicyclohexylmethane, aminoethylpiperazine, methane diamine, isophorone diamine, xylylene diamine, and polyoxyalkylene amine [for example, "JEFFAMINE" (registered trademark)].

An aromatic amine can be used in combination with the above-mentioned curing agent, although the aromatic amine is not an indispensable component. As typical examples of the aromatic amine, there can be mentioned diaminodiphenylsulfone, diaminodiphenyl ether, diaminodiphenylmethane and diaminodiethylmethylbenzene [for example, "Ethancure" (registered trademark)].

(b) Reactive Diluent

In the composition [I], to dissolve and liquefy UPE in the polyfunctional epoxide, preferably a reactive diluent is used in combination with the polyfunctional epoxide. In the composition [II], where a liquid curing agent is to be used, most preferably a reactive diluent is used for liquefying a solid amine, although the reactive diluent is not an indispensable component. The reactive diluent can be used for both of the compositions [I] and [II], to reduce the viscosity thereof. Note, the reactive diluent should not cause a change of the viscosity of the composition [I] or [II] with the lapse of time, due to a reaction with the UPE or polyfunctional epoxide component, to thereby degrade the utility of the resin composition.

Typical examples of the reactive diluent are described below.

1) Styrene and analogous compounds such as styrene, α-methylstyrene, halogen-substituted styrene, nitrostyrene, alkyl-substituted styrene, divinylbenzene, vinyltoluene, vinylpyridine, N-vinylpyrrolidone and vinylnaphthalene.

2) Unsaturated carboxylic acid esters such as various esters of acrylic acid, methacrylic acid, crotonic acid, α-phenylacrylic acid, α-cyclohexylacrylic acid, maleic acid, α-chloroacrylic acid, itaconic acid, citraconic acid, fumaric acid, cyanoacrylic acid and methoxyacrylic acid.

3) Unsaturated nitriles such as acrylonitrile and methacrylonitrile.

4) Allyl compounds such as diallyl phthalate, diallyl isophthalate, diallyl terephthalate and triallyl isocyanurate.

5) Olefins and diolefins such as amylene, isoprene, vinylcyclohexane, vinylhexane, vinylcyclopentane and vinylcyclopentene.

Of the foregoing reactive diluents, some reactive diluents can be used for both of the compositions [I] and [II], other reactive diluents can be used only for the composition [I], and still other reactive diluents can be used only for the composition [II]. For example, since styrene does not substantially react with the components contained in the compositions [I] and [II] at the storage temperature, styrene can be used for both of the compositions. Accordingly, styrene is especially preferred as the reactive diluent. A reactive diluent which reacts with an amine cannot be used for the composition [II]. A reactive diluent which reacts with UPE and/or the polyfunctional epoxide cannot be used for the composition [I].

Additives to Composition [I] and/or Composition [II]

In the present invention, a radical initiator described hereinafter is incorporated in at least one of the above-mentioned compositions [I] and [II]. Furthermore, a chain transfer agent, a polymerization inhibitor and a curing promoter can be used.

(a) Radical Initiator

In the present invention, a radical initiator is incorporated into at least one of the above-mentioned compositions [I] and [II]. The amount incorporated of the radical initiator depends not only on the kinds and amounts of UPE and the vinyl-polymerizable reactive diluent (on which the radical initiator acts) and the kinds of the radical initiator, but also on the desired molding temperature and curing time. In general, the radical initiator is used in an amount of 0.01 to 5 phr, preferably 0.05 to 2 phr, especially preferably 0.1 to 0.5 phr, based on the sum of UPE and the vinyl-polymerizable reactive diluent. At least one member selected from compounds mentioned below can be used as the radical initiator.

Of the two components on which the radical initiator acts, i.e., the UPE and vinyl-polymerizable reactive diluent components, in general, the UPE component is more readily influenced by the radical initiator, and accordingly, preferably the radical initiator is incorporated in the composition [II]. Nevertheless, a radical initiator which reacts with an amine to drastically shorten the half-value period, such as BPO, is incorporated into the composition [I].

The radical initiator can be incorporated into the composition [I] and/or the composition [II] at the step of preparing the composition or during the storage, but preferably the radical initiator is added before molding the curable resin, especially just before molding.

The radical initiator is very stable, slightly unstable or extremely unstable to the amine-type curing agent according to the chemical structure thereof. A stable radical initiator can be incorporated into the composition [II], but a radical initiator, the decomposition of which is promoted by the amine, is incorporated in the composition [I].

If the unsaturated polyester component is allowed to stand in the presence of a radical initiator at a temperature lower than the molding temperature for several hours to scores of hours, the viscosity is gradually elevated and the intended object of the present invention can not be attained. Accordingly, an appropriate time must be selected for the incorporation of the radical initiator into the composition [I].

The molding temperature and molding time can be adjusted by incorporating an appropriate amount of the radical initiator according to need. Specific examples of the radical initiator that can be used in the present invention will now be described.

As typical instances of the radical initiator, there can be mentioned a peroxyketal such as 1,1-di-tertiary-butyl-3,3,5-trimethylcyclohexane, a percarbonate such as bis-(4-tertiary-cyclohexyl)peroxydicarbonate, and a per-ester such as tertiary-butyl peroctoate or tertiary-butyl perbenzoate.

As the radical initiator which is used at a higher molding temperature than the molding temperature adopted for the foregoing initiators, there can be mentioned a dialkyl peroxide such as 1,3-bis-tertiary-butylperoxyisopropylbenzene or dicumyl peroxide, and a peroxyketal such as 1,1-di-tertiary-butyl-3,3,5-trimethylcyclohexane.

In the present invention, since the resin liquid is divided into the composition [I] and the composition [II], a combination of components where a curing reaction is caused by mixing at a temperature close to room temperature, for example, a combination of BPO (benzoyl peroxide) and a tertiary amine, can be incorporated dividedly into the two compositions, and by mixing the two compositions, curing is caused at a temperature close to room temperature. Namely, the advantages of the two-part system are properly utilized. For example, not only the above-mentioned redox system but also a system comprising a radical initiator and a radical reaction promoter for example, cobalt naphthenate) can be used in the present invention.

In the present invention, curing characteristics can be controlled by using at least two radical initiators, for example, a medium-temperature-curing radical initiator and a high-temperature-curing radical initiator (see Japanese Patent Application No. 63-49865).

(b) Amine-Curing Promoter

In the present invention, a hydroxybenzoic acid is preferably used as the amine-curing promoter.

As typical instances, there can be used salicylic acid, m-hydroxybenzoic acid, p-hydroxybenzoic acid, 1-hydroxy-2-naphthoic acid, 3-hydroxy-2-naphtholic acid and gallic acid. Also, a corresponding mercapto aromatic acid can be used. Furthermore, aliphatic hydroxycarboxylic acids such as lactic acid, glycolic acid, hydroxybutyric acid, hydroxyvaleric acid, β-hydroxypropionic acid, leucenic acid and mandelic acid, and aliphatic mercaptocarboxylic acids such as thioglycolic acid, thiohydracrylic acid, thiolactic acid, thiovaleric acid, thiomelic acid and β-mercaptopropionic acid can be used.

The curing promotor is used in an amount of 1 to 25 parts by weight, preferably 2 to 10 parts by weight, per 100 parts by weight of the amine used.

Mixing, Molding and Curing of Compositions [I] and [II]

As pointed out hereinbefore, according to the present invention, a relative curable resin composition composed of a composite polymer comprising a curable unsaturated polyester resin composition and an amine-curable epoxy resin composition is molded and cured to obtain a molded article. This reactive curable resin composition can be subjected to molding such as RIM or RTM by incorporating a radical initiator, and if necessary other reactants, appropriately.

In the present invention, the resin-forming component weight ratio between the liquid composition [I] and the liquid composition [II] is in the range of from 30/70 to 90/10, preferably from 50/50 to 85/15, especially preferably from 60/40 to 85/15/. Furthermore, preferably the liquid ratio between the liquid composition [I] and the liquid composition [II] is such that the weight ratio of (A) the curable unsaturated polyester system comprising the unsaturated polyester, the vinyl-polymerizable reactive diluent and the radical initiator to (B) the curable epoxy system comprising the polyfunctional epoxide, the amine-type epoxy-curing agent and the amine-curing promotor to be added according to need, i.e., the (A)/(B) weight ratio, is in the range of from 90/10 to 10/90, more preferably from 80/20 to 30/70, most preferably from 30/70 to 40/60. If this weight ratio exceeds 90/10, the cured molded article becomes brittle, and if the above-mentioned weight ratio is lower than 10/90, problems such as a slower curing speed (or need to elevate the molding temperature) and an increase of the viscosity of the composition readily occur at the molding step.

The preferred mixing ratio between UPE and the polyfunctional epoxide is substantially determined if the above-mentioned weight ratio (A)/(B) is determined and compounds to be used for the UPE and epoxide components are selected. The compounds to be used for the two components are selected while taking the following factors into consideration.

(1) (A)/(B) weight ratio (having an influence on the performance of the cured resin and the moldability)

(2) Solution viscosity of the composition [I] (having an influence on the moldability)

(3) Solution viscosity of the composition [II] (having an influence on the moldability)

(4) Liquid ratio between the composition [I] and the composition [II]

The polyfunctional epoxide has a relatively high viscosity and is often a solid or semi-solid. Accordingly, often the solution viscosity of the composition [I] is considerably higher than that of the composition [II].

As the means for reducing the solution viscosity of the composition [I], there can be adopted not only a modification of the skeleton of UPE and reduction of the molecular weight of UPE, as mentioned above, but also a change of the skeleton or composition of the polyfunctional epoxide and incorporation of a viscosity cutter. Furthermore, a method can be adopted in which a part of the reactive diluent used for the composition [II] is transferred into the composition [I] or a part of UPE in the composition [I] is transferred into the composition [II], as specifically disclosed in the examples given hereinafter.

In the present invention, preferably each of the solution viscosities of the liquid compositions [I] and [II] is lower than 1000 cps.

In the present invention, the preparation of a molded article is carried out substantially according to the two-liquid system. The liquid mixture comprising the compositions [I] and [II], in which the radical initiator and the like are incorporated, has a low viscosity just after the mixing. Namely, the liquid mixture has a low viscosity below 5 poise at a molding temperature, and the liquid mixture has a very good moldability and good impregnation of reinforcing fibers. Preferably the mixing is effected just before or simultaneously with the molding.

For the molding, a method can be adopted in which the liquid compositions [I] and [II] are mixed, if necessary after heating, the liquid mixture is introduced into a mold maintained at a molding temperature, in which reinforcing fibers have been arranged in advance, and impregnation of the fibers with the liquid mixture and curing of the liquid mixture are carried out in the mold. In this method, preferably the ratio (Vf) of the reinforcing fibers to the total weight of the resin components (liquid composition [I] + liquid composition [II]) is 25 to 75%.

After the molding, the respective components are reacted in the mold to obtain a molded article having a predetermined shape. The reaction temperature is changed according to the kinds and ratios of the compounds used, but preferably the reaction temperature is 10 to 150 °C, more preferably 20 to 130 °C, most preferably 50 to 100 °C. The reaction time is changed according to the kinds and ratios of the starting materials used and curing molding conditions such as the reaction temperature, but the liquid mixture of the present invention has a fast-curing property such that the curing is finished within 30 minutes, preferably within 15 minutes, more preferably within 10 minutes.

Molding and curing can be carried out under atmospheric pressure or elevated pressure. Where there is a danger that the resin will be influenced by water in the atmosphere or the resin degraded by the oxidation, the curing and molding can be carried in an atmosphere of an inert gas such as nitrogen.

The thermal and mechanical properties of the cured molded article prepared according to the present invention can be further improved by carrying out a so-called post curing, i.e., heating the cured molded article at a temperature higher than the reaction temperature, if necessary.

The post curing temperature is changed according to the composition of the resins and the intended improvement of the properties, but is preferably 120 to 200 °C, more preferably 140 to 180 °C. Also, the post curing time is changed according to the post curing temperature, but is preferably several hours to 20 hours, more preferably 3 to 10 hours.

The two-liquid system of the liquid compositions [I] and [II] according to the present invention is used for RIM and RTM, casting, resin injection, and encapsulation. By appropriately incorporating reinforcing fibers such as glass fibers, carbon fibers and aramid fibers, fillers, pigments, colorants, antioxidants, ultraviolet absorbers, flame retardants, release agents and the like in the liquid compositions, the utility of the cured molded article according to the present invention can be further increased.

As the filler, there can be used inorganic fine particles of calcium carbonate, talc and milled glass, thermosetting resins such as epoxy resin and unsaturated polyesters, thermoplastic resins such polystyrene, polyamides and polyesters, and sawdust.

In the cured resin molded article obtained according to the preparation process of the present invention, the properties are highly improved since the epoxy resin is added to the UPE resin. Namely, the heat resistance, molding shrinkability, surface characteristics, toughness and the like are preferably improved over those of a curable molding composition composed solely of UPE. Furthermore, since the composition system is divided into two liquid compositions [I] and [II], the storage stability of each of both the liquids is good, the composition system has a superior workability to that of a one-liquid system. Moreover, since an amine-curing type epoxide is used, the toughness, especially the impact resistance, of the cured molded article is much higher than when an other curing agent, for example, an acid anhydride, is used.

The present invention will now be described in detail with reference to the following examples. In the examples, the heat distortion temperature was measured under a load of 18.4 $kg/cm^2$; all of "parts" are by weight, and the acid value of UPE is moles per ton of the polymer; and the abbreviations of monomers and polymers used in the examples are shown in Table 1.

The acid value of the UPE resin was measured by dissolving the resin in benzyl alcohol and titrating the solution with an aqueous NaOH solution and expressed in -COOH moles/ton of polymer.

Table 1

| Abbreviation | Chemical Composition |
|---|---|
| UPE (1) | fumaric acid ester residue/isophthalic acid residue/propylene glycol residue = 67/33/100 (molar ratio); acid value = 680; viscosity of 50% styrene solution(25 °C) = 2.9 poises |
| UPE (2) | fumaric acid ester residue/isophthalic acid residue/propylene glycol residue = 50/50/100 (molar ratio); acid value = 520; viscosity of 50% styrene solution(25 °C) = 3.5 poises |
| BSY-GLY | bisphenol F diglycidyl ether (epoxy value = 174) |
| BSA-GLY (1) | low-viscosity epoxy-modified bisphenol A diglycidyl ether (epoxy value = 190) |
| BSA-GLY (2) | bisphenol A diglycidyl ether (epoxy value = 195) |
| NOVO-GLY | novolak type glycidyl ether (epoxy value = 175) |
| DIMA-GLY | dimer acid diglycidyl ester |
| BGE | butylglycidyl ether |
| Amine A | diamino-di(methylcyclohexyl)methane; liquid at room temperature |
| Amine B | isophorone diamine; liquid at room temperature |
| Amine C | m-xylylene diamine; liquid at room temperature |
| Amine D | p-xylylene diamine; melting point = 62 - 64 °C |
| RCATA (1) | tertiary-butylperoxy-2-ethyl hexanoate |
| RCATA (2) | 1,3-di-tertiary-butylperoxy-3,3,5-trimethylcyclohexane |

Example 1

The recipe of the two-liquid system comprising the compositions (I) and (II) of the present invention is shown. A low-viscosity epoxy (registered tradename: Epikote 815) composed of BSA-GLY (1) was used as the polyfunctional epoxide, and compositions shown in Table 2-1 were prepared. A part of styrene is the composition [II] was transferred into the composition [I] (referred to as "transferred styrene") to obtain compositions shown in Table 2-2.

No substantial change of the viscosity when measured at 40 °C was observed over a period of more than 7 days for $A_1$ , $B_1$ , $A_2$ and $B_2$.

Table 2-1

| | Components | $A_1/B_1$ | Itemization |
|---|---|---|---|
| Composition [I] (liquid $A_1$) | UPE (1) | | 25.0 |
| | BSA-GLY (1) | | 37.0 |
| | transferred styrene | 62/38 | 0 |
| Composition [II] (liquid $B_1$) | Styrene | | 25.0 |
| | Amine B | | 13.0 |
| Liquid viscosity, cps (°C) | | $A_1$: | 2400 (60 °C) |
| | | $B_1$: | < 20 (30 °C) |

Table 2-2

| | Components | $A_2/B_2$ | Itemization |
|---|---|---|---|
| Composition [I] (liquid $A_2$) | UPE (1) | | 25.0 |
| | BSA-GLY (1) | | 37.0 |
| | transferred styrene | $\frac{70}{30}$ | 8.0 |
| Composition [II] (liquid $B_2$) | Styrene | | 17.0 |
| | Amine B | | 13.0 |
| Liquid viscosity, cps (°C) | | $A_2$: | 210 (60°C) |
| | | | 2200 (30°C) |
| | | $B_2$: | < 20 (30°C) |

Example 2

In the present example, a medium-viscosity epoxy (registered tradename: Epikote 807) composed of BSF-GLY was used as the polyfunctional epoxide, and a part of styrene in the composition [II] shown in Table 3-1 was transferred into the composition [I] to form compositions shown in Table 3-2.

The viscosity when measured at 40°C was not changed over more than 7 days for $A_3$, $B_3$, $A_4$, and $B_4$.

Table 3-1

| | Components | $A_3/B_3$ | Itemization |
|---|---|---|---|
| Composition [I] (liquid $A_3$) | UPE (1) | | 25.0 |
| | BSA-GLY | | 39.8 |
| | transferred styrene | $\frac{65}{35}$ | 0 |
| Composition [II] (liquid $B_3$) | Styrene | | 25.0 |
| | Amine B | | 10.2 |
| Liquid viscosity, cps (°C) | | $A_3$: | 4000 (60°C) |
| | | $B_3$: | < 20 (30°C) |

Table 3-2

| | Components | $A_4/B_4$ | Itemization |
|---|---|---|---|
| Composition [I] (liquid $A_4$) | UPE (1) | | 25.0 |
| | BSA-GLY | | 39.8 |
| | transferred styrene | 70/30 | 5.5 |
| Composition [II] (liquid $B_4$) | Styrene | | 19.5 |
| | Amine B | | 10.2 |
| Liquid viscosity, cps (°C) | | $A_4$: | 620 (60°C) |
| | | | 11580 (30°C) |
| | | $B_4$: | < 20 (30°C) |

## Example 3

A part of the UPE in the composition [I] shown in Table 2-1 in Example 1 or Table 3-1 in Example 2 was transferred to the composition [II], and a part of styrene in the composition [II] was transferred to the composition [I], whereby the compositions shown in Tables 4 and 5 were prepared. Each of the compositions was stable for more than 7 days.

Table 4

| | Components | $A_5/B_5$ | Itemization |
|---|---|---|---|
| Composition [I] (liquid $A_5$) | UPE (1) | | 22.5 |
| | BSA-GLY (1) | | 37.0 |
| | transferred styrene | 30/70 | 10.5 |
| Composition [II] (liquid $B_5$) | transferred UPE | | 2.5 |
| | Styrene | | 14.5 |
| | Amine A | | 13.0 |
| Liquid viscosity, cps (°C) | | $A_5$: | 510 (30°C) |
| | | | 85 (60°C) |
| | | $B_5$: | < 20 (30°C) |

Table 5

| | Components | $A_6/B_6$ | Itemization |
|---|---|---|---|
| Composition [I] (liquid $A_6$) | UPE (1) | | 21.3 |
| | BSF-GLY | | 39.8 |
| | transferred styrene | 30/70 | 9.3 |
| Composition [II] (liquid $B_6$) | transferred UPE | | 3.8 |
| | Styrene | | 15.8 |
| | Amine A | | 10.2 |
| Liquid viscosity, cps (° C) | | $A_6$: | 5700 (30° C) |
| | | | 370 (60° C) |
| | | $B_6$: | < 20 (30° C) |

The viscosity when measured at 40° C remained substantially unchanged over a period of 4 days for $A_5$, $A_6$, $B_5$ and $B_6$, but after 5 days, gelation occurred in $A_5$ and $A_6$. Nevertheless, if the amount of UPE transferred to the composition [II] from the composition [I] was reduced to 2.25 g, the liquids were stable for more than 7 days.

Example 4

A viscosity cutter was incorporated in the composition [I] shown in Table 2-1 of Example 1 to obtain the compositions shown in Table 6.

Table 6

| | Components | $A_7/B_7$ | Itemization |
|---|---|---|---|
| Composition [I] (liquid $A_7$) | UPE (1) | | 25.0 |
| | BSA-GLY (1) | | 35.6 |
| | BGE | 62/38 | 1.3 |
| Composition [II] (liquid $B_7$) | Styrene | | 25.0 |
| | Amine A | | 13.0 |
| Liquid viscosity, cps (° C) | | $A_7$: | 622 (30° C) |
| | | | 16000 (60° C) |
| | | $B_7$: | < 20 (30° C) |

Example 5

A viscosity cutter was added to the composition [I] shown in Table 2-1 of Example 1 and a part of the UPE was transferred to the composition [II], whereby the compositions shown in Table 7 were obtained.

Table 7

| | Components | $A_8/B_8$ | Itemization |
|---|---|---|---|
| Composition [I] (liquid $A_8$) | UPE (1) | | 25.0 |
| | BSA-GLY | | 37.8 |
| | BGE | | 2.0 |
| | transferred styrene | $\frac{62}{38}$ | 5.5 |
| Composition [II] (liquid $B_8$) | Styrene | | 19.5 |
| | Amine A | | 10.2 |
| Liquid viscosity, cps (°C) | | $A_8$: | 9700 (30°C) |
| | | | 510 (60°C) |
| | | $B_8$: | < 20 (30°C) |

Example 6

The compositions [I] and [II] shown in Table 8 were preheated at 60°C, mixed and pressed into a mold maintained at 100°C, to obtain a molded plate, and the obtained molded plate was heat-treated at 150°C for 5 hours.

The results of the heat distortion temperature and bending tests of the obtained molded plate are shown in Table 8.

Table 8

| Composition [I] | | Composition [II] | | Post curing | Properties | | | |
|---|---|---|---|---|---|---|---|---|
| | | | | | HDT (°C) | impact strength (notched) | flexural properties strength ($kg/mm^2$) | flexural properties modulus ($kg/mm^2$) |
| UPE (1) | 25.0 | Amine A | 12.7 | not effected | 103 | 2.4 | 16 | 340 |
| NOVO-GLY | 37.3 | Styrene | 20.0 | | | | | |
| Styrene | 5.0 | RCATA (1) | 0.5 | effected | 113 | 1.4 | 14 | 350 |
| | | RCATA (2) | 0.5 | | | | | |
| UPE (1) | 25.0 | Amine B | 10.2 | not effected | 60 | 2.2 | 14 | 310 |
| BSF-GLY | 39.8 | Styrene | 15.7 | | | | | |
| Styrene | 9.3 | RCATA (1) | 0.5 | effected | 98 | 2.5 | 18 | 350 |
| | | RCATA (2) | 0.5 | | | | | |
| UPE (2) | 25.0 | Amine B | 10.2 | | | | | |
| BSF-GLY | 39.8 | Styrene | 15.7 | not effected | 88 | 2.5 | 17 | 360 |
| Styrene | 9.3 | RCATA (1) | 0.5 | | | | | |
| | | RCATA (2) | 0.5 | | | | | |
| UPE (1) | 25.0 | Amine C | 8.3 | not effected | 61 | 1.3 | 13 | 360 |
| NOVO-GLY | 41.7 | Styrene | 15.0 | | | | | |
| Styrene | 10.0 | RCATA (1) | 0.5 | effected | 90 | 2.3 | 15 | 380 |
| | | RCATA (2) | 0.5 | | | | | |

Table 8 (Continued)

| Composition [I] | | Composition [II] | | Post curing | Properties | | | |
|---|---|---|---|---|---|---|---|---|
| | | | | | HDT (°C) | impact strength (notched) | flexural properties strength (kg/mm$^2$) | flexural properties modulus (kg/mm$^2$) |
| UPE (1)<br>NOVO-GLY<br>Styrene | 25.0<br>41.7<br>10.0 | Amine D<br>Styrene<br>RCATA (1)<br>RCATA (2) | 8.3<br>15.0<br>0.5<br>0.5 | not effected | 46 | - | 5 | 130 |
| | | | | effected | 89 | - | 15 | 340 |
| UPE (2)<br>BSF-GLY<br>DIMA-GLY | 25.0<br>35.4<br>4.5 | Amine A<br>Styrene<br>RCATA (1)<br>RCATA (2) | 10.1<br>25.0<br>0.5<br>0.5 | not effected | 94 | 2.5 | 15 | 290 |
| | | | | effected | 84 | 1.4 | - | - |
| UPE (1)<br>BSF-GLY<br>BGE | 22.5<br>37.4<br>2.1 | UPE (1)<br>Amine A<br>Styrene<br>RCATA (1)<br>RCATA (2) | 2.5<br>10.5<br>25.0<br>0.5<br>0.5 | effected | 93 | 1.3 | - | - |

Example 7

The resin transfer molding (RTM) is exemplified.

The compositions [I] and [II] (liquids $A_6$ and $B_6$) shown in Table 5 of Example 3 were prepared, the two liquids were charged in tanks A and B, respectively, of a two-liquid system RTM testing machine, and RCATA (1) and RCATA (2) were added as radical initiators to the tank A. The amount added to each radical initiator was 1 phr based on the total weight. The liquids were then deaerated under a reduced pressure, and the tanks A was maintained at 45° C.

In a mold of an RTM molding machine having a plate-like shape 500 mm x 500 mm x 3 mm (thickness), 10 plies of a glass cloth (Vf = 26%) were arranged, and the temperature of the mold was set at 105° C. Both liquids were fed under a pressure of 5 kg/cm$^2$ and a weight ratio between the liquids ($A_6$/$B_6$) of

70.4/29.8, the liquids were mixed by a mixing head having a static mixer inserted therein, and the mixture was introduced into the mold from a central portion thereof. The fiber-reinforced molded plate was completely impregnated with the resin, including the end portions thereof. The mixed resin liquid remaining in a conduit in the vicinity of the static mixer was kept flowable for more than several hours, and the resin transfer molding (RTM) was smoothly carried out in a continuous manner so that the time required for one run was 25 minutes. The properties of the obtained glass-reinforced molded plate are shown in Table 9.

Table 9

| | Specific gravity | Flexural strength ($kg/mm^2$) | Flexural modulus ($kg/mm^2$) | Interlaminar shear strength ($kg/mm^2$) | Heat distortion temperature (°C) |
|---|---|---|---|---|---|
| glass-reinforced molded plate | 1.53 | 40.4 | 1300 | 4.2 | about 300 |
| non-reinforced molded plate (Vf = 0) | 1.12 | 15.0 | 290 | - | 113 |

Comparative Example 1

The compositions [I] and [II] (liquids $A_6$ and $B_6$) shown in Table 5 of Example 3 were maintained at 30 °C, both liquids were mixed in a one-liquid system RTM tank at a liquid weight ratio ($A_6/B_6$) of 70.4/29.8, and the mixture was promptly deaerated. The subsequent procedures were the same as those described in Example 7. When the mixture was stored in the tank at a temperature of 45 °C, the resin transfer molding (RTM) was carried out in the same manner as described in Example 7, 15 minutes after the point of the mixing. The obtained fiber-reinforced molded plate was thoroughly impregnated with the resin, but the molded plate obtained at the second run conducted 40 minutes from the point of the mixing was not sufficiently impregnated at the end portions thereof.

## Claims

1. A process for the preparation of a cured resin molded article, which comprises forming independently [I] a liquid composition consisting essentially of an unsaturated polyester and a polyfunctional epoxide and [II] a liquid composition consisting essentially of an amine type epoxy-curing agent and a vinyl-polymerizable reactive diluent, incorporating a radical initiator into at least one of said two liquid compositions before or at the molding step, mixing both liquid compositions at the molding step, and reacting and curing the mixture.

2. A process according to claim 1, wherein an amine-curing promoter is incorporated in at least one of the liquid compositions [I] and [II].

3. A process according to claim 1, wherein the vinyl-polymerizable reactive diluent is incorporated in the liquid composition [II] and the liquid composition [I].

4. A process according to claim 1, wherein the unsaturated polyester is an unsaturated polyester having an average molecular weight corresponding to a viscosity of 1 to 50 poises as measured in a 50 % styrene solution at 25 °C and an acid value of 50 to 4,000 moles per ton of the polymer, which is derived from an unsaturated aliphatic dicarboxylic acid, an aromatic dicarboxylic acid and an aliphatic diol.

5. A process according to claim 1, wherein the polyfunctional epoxide is at least one member selected from the group consisting of aromatic polyglycidyl ethers, aromatic glycidyl esters and aromatic polyglycidyl esters.

6. A process according to claim 1, wherein the amine type epoxy-curing agent is at least one member selected from the group consisting of aliphatic polyamines and alicyclic polyamines having a melting point lower than 200 °c.

7. A process according to claim 1, wherein the amine type epoxy-curing agent is an aromatic diamine having a melting point lower than 200 °C.

8. A process according to claim 1, wherein the amine type epoxy-curing agent is a mixture of an aliphatic polyamine and an aromatic diamine having a melting point lower than 200 °C.

9. A process according to claim 1, wherein the vinyl-polymerizable reactive diluent is a compound having a melting point lower than 30 °C, which is selected from the group consisting of styrene and analogous compounds thereof.

10. A process according to claim 1, wherein the radical initiator is a compound selected from the group consisting of per-esters and peroxyketals.

11. A process according to claim 1, wherein the resin-forming component weight ratio between the liquid composition [I] and the liquid composition [II] at the mixing step is in the range of from 30/70 to 90/10, preferably from 50/50 to 85/15, especially preferably from 60/40 to 85/15.

12. A process according to claim 1, wherein the ratio between the liquid composition [I] and the liquid composition [II] is such that the weight ratio (A)/(B) between an unsaturated polyester-curing system (A) comprising the unsaturated polyester, the vinyl-polymerizable reactive diluent and the radical initiator and an epoxy-curing system (B) comprising the polyfunctional epoxide, the amine type epoxy-curing agent and the amine-curing promoter to be added according to need is in the range of from 90/10 to 10/90.

13. A process according to claim 1, wherein the liquid viscosity of each of the liquid compositions [I] and [II] is lower than 1,000 cps.

14. A process according to claim 1, wherein the liquid compositions [I] and [II] are mixed, after heating according to need, the liquid mixture is introduced into a mold maintained at a molding temperature, in which reinforcing fibers are arranged, and impregnation of the fibers with the liquid mixture and curing of the liquid mixture are carried out in the mold.

15. A process according to claim 1, wherein the radical initiator is incorporated into at least one of the liquid compositions [I] and [II] just before the molding.

16. A process according to claim 14,· wherein the ratio (Vf) of the reinforcing fibers is 25 to 75% by weight based on the sum of the resin components (liquid composition [I] + liquid composition [II]) and the reinforcing fibers.

17. A process according to claim 14, wherein after the curing and molding, the molded article is heat-treated at 120 to 200 °C to effect post curing.

18. A stable reactive curable molding composition which comprises, in combination, [I] a liquid composition consisting essentially of an unsaturated polyester and a polyfunctional epoxide and [II] a liquid composition consisting essentially of an amine type epoxy-curing agent and a vinyl-polymerizable reactive diluent, a radical initiator being incorporated in at least one of said two liquid compositions.

19. A composition according to claim 18, wherein an amine-curing promoter is incorporated in at least one of the liquid compositions [I] and [II].

20. A composition according to claim 18, wherein the vinyl-polymerizable reactive diluent is incorporated into the liquid composition [II] and the liquid composition [I].

21. A composition according to claim 18, wherein the unsaturated polyester is an unsaturated polyester having an average molecular weight corresponding to a viscosity of 1 to 50 poises as measured in a 50 % styrene solution at 25 °C and an acid value of 50 to 4,000 moles per ton of the polymer, which is derived from an unsaturated aliphatic dicarboxylic acid, an aromatic dicarboxylic acid and an aliphatic diol.

22. A composition according to claim 18, wherein the polyfunctional epoxide is at least one member selected from the group consisting of aromatic polyglycidyl ethers, aromatic glycidyl esters and aromatic polyglycidyl esters.

23. A composition according to claim 18, wherein the amine type epoxy-curing agent is at least one member selected from the group consisting of aliphatic polyamines and alicyclic polyamines having a melting point lower than 200 °C.

24. A composition according to claim 18, wherein the amine type epoxy-curing agent is an aromatic diamine having a melting point lower than 200 °C.

25. A composition according to claim 18, wherein the amine type epoxy-curing agent is a mixture of an aliphatic polyamine and an aromatic diamine having a melting point lower than 200 °C.

26. A composition according to claim 18, wherein the vinyl-polymerizable reactive diluent is a compound having a melting point lower than 30 °C, which is selected from the group consisting of styrene and analogous compounds thereof.

27. A composition according to claim 18, wherein the radical initiator is a compound selected from the group consisting of per-esters and peroxyketals.